# EUROPÄISCHE PATENTSCHRIFT

(11) **EP 0 572 886 B1**
(45) Veröffentlichungstag und Bekanntmachung des Hinweises auf die Patenterteilung: **21.02.1996**
(21) Anmeldenummer: 93108333.1
(22) Anmeldetag: 24.05.1993
(51) Int. Cl.: E03F 5/10, G05D 9/02, F16K 31/30

(54) **Abflussregler für Ausläufe aus Flüssigkeitsbehältern**
Flow regulator for the outlet of a liquid container
Régulateur d'écoulement pour la sortie d'un réservoir de liquide

(30) Priorität: 03.06.1992 DE 4218254
(43) Veröffentlichungstag der Anmeldung: 08.12.1993
(73) Patentinhaber: Steinhardt, Lothar, Dipl.-Ing., D-65239 Hochheim (DE)
(72) Erfinder: Steinhardt, Lothar Dipl.-Ing., D-65239 Hochheim (DE); Steinhardt, Jörg-Michael Dipl.-Ing., D-65232 Taunusstein (DE)
(74) Vertreter: Quermann, Helmut, Dipl.-Ing.

(56) Entgegenhaltungen:
- EP-A- 0 108 378
- EP-A- 0 221 349
- EP-A- 0 343 435
- DE-A- 3 822 555

## Beschreibung

Die Erfindung betrifft einen Abflußregler für Ausläufe aus Flüssigkeitsbehältern, insbesondere Regenrückhalteräumen, mit dem eine Auslauföffnung des Behälters mittels einer Blende in Abhängigkeit vom Flüssigkeitsniveau im Behälter mehr oder weniger abgeblendet bzw. freigegeben wird, wobei die Blende über einen Antrieb gesteuert wird, der mittels Übertragungselementen mit der Blende verbunden ist.

Bei Abflußreglern der genannten Art sind im wesentlichen zwei Typen zu unterscheiden, nämlich solche, bei denen die Blende über der Auslauföffnung in einem stationären Bauteil, beispielsweise in einer Wand des Behälters oder einer mit der Behälterwand verbundenen Grundplatte vertikal beweglich geführt ist, oder solche, bei denen die Blende um eine oberhalb der Auslauföffnung angeordnete stationäre Achse schwenkbar ist.

Ein Abflußregler der genannten Art entsprechend der erstgenannten Gestaltung ist beispielsweise aus der EP 0.396.129 bekannt. Bei diesem ist der Antrieb als Schwimmer ausgebildet. Die Abblendcharakteristik der Blende wird dadurch erreicht, daß die Übertragungselemente eine Kurvenscheibe umfassen, die die Bewegung eines Schwimmerarmes auf ein Hebelteil des Übertragungselementes überträgt, das seinerseits mit einer im wesentlichen vertikal beweglichen Übertragungsstange verbunden ist. Die einzelnen Übertragungselemente sind dabei zwangsgekoppelt, d.h. es besteht keine Möglichkeit, die Blendenstellung zu verändern, sofern von einer unveränderlichen Position des Schwimmers ausgegangen wird.

Ein Abflußregler der genannten Art entsprechend der zweitgenannten Gestaltung ist beispielsweise aus der EP-A- 0.221.349 bekannt. Bei diesem sind in einer Grundplatte beabstandet übereinander zwei Seilscheiben drehbar gelagert, die ein Treibriemen umschlingt. Drehfest mit der oberen Seilscheibe ist ein Schwimmerarm mit Schwimmer verbunden, drehfest mit der unteren Seilscheibe eine Blende. Die Blende ist an ihrer Unterseite mit einer Abblendkurve versehen, die entsprechend der gewünschten Abblendcharakteristik der Auslauföffnung ausgebildet ist. Auch bei diesem Abflußregler ist Voraussetzung, daß sich die Blende nicht unabhängig vom Schwimmer bewegen läßt, da sonst die Zuordnung von Schwimmer- und Blendenposition nicht mehr stimmen würde und die Abblendung der Auslauföffnung in Abhängigkeit vom Flüssigkeitseinstau im Behälter nicht mehr gewährleistet wäre.

Aus der EP-A- 0.323.393 ist ein Abflußregler bekannt, der automatisch eine Verlegung der Auslauföffnung des Behälters in Folge sich dort ansammelnder Schmutzstoffe behebt. Hierzu ist die Blende mit einem zweiseitig vom Flüssigkeitsdruck beaufschlagbaren Druckaufnehmer bewegungsschlüssig verbunden, so daß eine Verlegung der Auslauföffnung eine Druckänderung und damit eine Öffnungsbewegung der Blende bei gleichzeitigem Anheben des Schwimmers bedingt. Nachdem die Verlegung behoben ist, wird aufgrund der sich dann einstellenden Druckverhältnisse die Ablauföffnung wieder abgeblendet mit einer entsprechenden Folgebewegung des Schwimmers. Bei dieser Gestaltung des Abflußreglers sind damit die Bewegungen von Blende und Schwimmer nicht entkoppelt.

Es ist Aufgabe der vorliegenden Erfindung, einen Abflußregler der genannten Art so weiterzubilden, daß dieser es gestattet, die Blende des Abflußreglers unabhängig von der Bewegung des Antriebes zu beliebigen Zeitpunkten zu öffnen, insbesondere um Verlegungen der Auslauföffnung zu beheben, aber auch um den Kanal zu beliebigen Zeiten spülen zu können.

Gelöst wird die Aufgabe bei einem Abflußregler der genannten Art dadurch, daß mindestens ein Kopplungsmittel zum Entkoppeln bzw. Koppeln von Antrieb und Blende sowie mindestens ein Betätigungsmittel zum Bewegen der Blende nach dem Entkoppeln von Antrieb und Blende vorgesehen sind.

Grundsätzlich sind im erfindungsgemäßen Sinne die unterschiedlichsten Antriebe denkbar, seien es hydraulisch, pneumatisch, elektrisch oder mechanisch wirkende, in Form von Motoren oder andersartigen Stellelementen. Bevorzugt ist der Antrieb als Schwimmer ausgebildet.

Wesentlich ist für die Erfindung damit, daß der Kraftschluß zwischen dem Antrieb und der Blende durch das mindestens eine Kopplungsmittel unterbrochen werden kann, und daß die Blende, ohne den Antrieb mitzubewegen, angehoben werden kann. Während im Normalfall Antrieb und Blende miteinander gekoppelt sind, um die definierte Abblendung der Auslauföffnung mittels der Blende sicherzustellen, ist nach dem Entkoppeln von Antrieb und Blende das Bewegen der Blende mittels des mindestens einen Betätigungsmittels möglich. Der vorrangige Zweck zum Bewegen der Blende besteht darin, diese über das mindestens eine Betätigungsmittel anzuheben, um Verlegungen der Auslauföffnung zu beheben. Grundsätzlich hat die Entkopplung damit den Vorteil, daß man die Blende beliebig hochziehen oder ausschwenken kann, unabhängig davon, ob sie in einer Grundstellung die Ablauföffnung schon teilweise abblendet, z.B. um eine große Ablauföffnung vorzuhalten, aber gleichzeitig geringste Abflüsse drosseln zu können. Für diesen Anwendungsfall bestünde die Möglichkeit, die Blende durch das mindestens eine Betätigungsmittel maximal hochzuziehen bzw. maximal auszuschwenken, so daß sich ein größerer Ablaufquerschnitt als der in Grundstellung gewünschte ergibt.

Grundsätzlich ergeben sich bei dem erfindungsgemäßen Abflußregler folgende Entkoppel- bzw. Koppelsituationen. So kann vorgesehen sein, daß die Entkopplung bzw. Kopplung von Antrieb und Blende zwischen den Übertragungselementen und der Blende erfolgt. Dies wird insbesondere bei der Gestaltung der Abflußregler mit vertikal verschiebbarer Blende der Fall sein. Es ist gleichfalls denkbar, daß die Entkopplung bzw. Kopplung von Antrieb und Blende zwischen den Übertragungselementen erfolgt. Dies wird insbesondere bei Abflußreglern der Fall sein, die eine schwenkbare Blende aufweisen. Grundsätzlich besteht aber auch die Möglichkeit, die Entkopplung bzw. Kopplung von Antrieb und schwenkbarer Blende zwischen den Übertragungselementen und der Blende vorzusehen, beispielsweise zwischen der unteren Seilscheibe und der Blende. Entsprechend kann die Entkopplung bzw. Kopplung von Antrieb und vertikal verschieblicher Blende auch zwischen den Übertragungselementen erfolgen.

Das Betätigungsmittel kann auf unterschiedlichste Art und Weise ausgebildet sein, bevorzugt ist es als Seil, Stange oder dergleichen ausgebildet. Da sich mit einem Seil keine Druckkräfte übertragen lassen, werden in aller Regel zwei Seile, d.h. zwei Betätigungsmittel zum Bewegen der Blende vorgesehen sein.

Gemäß einer besonderen Ausführungsform der Erfindung ist vorgesehen, daß die Blende über die Auslauföffnung in einem stationären Bauteil vertikal beweglich geführt ist, wobei die Übertragungselemente einen um eine stationäre Achse schwenkbaren Schwimmerarm und eine mit der Blende verbundene Übertragungsstange sowie eine zwischen Schwimmerarm und Übertragungsstange angeordnete Steuerung aufweisen, wobei ferner die Blende in deren Stellrichtung relativ zur Übertragungsstange verschiebbar gelagert ist und daß mindestens ein zwischen Übertragungsstange und Blende wirksames Kopplungsmittel in einer ersten Stellung die Blende und die Übertragungsstange in Stellrichtung der Blende verbindet, sowie in einer zweiten Stellung in Stellrichtung der Blende entkoppelt, wobei weiterhin das mindestens eine Betätigungsmittel zum Bewegen der Blende an dieser und/oder dem Kopplungsmittel angreift. Bei dieser Ausgestaltung des Abflußreglers mit der vertikal beweglichen Blende erfolgt die Umsetzung der über den Schwimmer eingeleiteten Bewegung des Schwimmerarmes in die Bewegung der Blende mittels der Über- bzw. Untersetzung. Die grundsätzliche Möglichkeit Blende und Schwimmerarm zu entkoppeln, ergibt sich aufgrund des Umstandes, daß die Blende in deren Stellrichtung relativ zur Übertragungsstange verschiebbar gelagert ist. Die eigentliche Kopplung der Teile erfolgt durch das Kopplungsmittel, das entweder Übertragungsstange und Blende miteinander verrastet oder freigibt. Das mindestens eine Betätigungsmittel zum Bewegen der Blende greift an der Blende und/oder dem Kopplungsmittel an.

Eine vorteilhafte Weiterbildung der Kopplung der vertikal beweglichen Blende mit dem Schwimmerarm sieht vor, daß das Kopplungsmittel als auf der Blende gelagerter Zapfen ausgebildet ist, der in seiner ersten Stellung in die Übertragungsstange eingreift und in seiner zweiten Stellung aus der Übertragungsstange ausgerückt ist, wobei die Betätigungsmittel zwei Seile umfassen, die an einem Lagerteil für den Zapfen angreifen, derart, daß bei Zugbetätigung eines Seiles der Zapfen ausgerückt und über das Lagerteil die Blende angehoben wird, und bei Zugbetätigung des anderen Seiles der Zapfen in Richtung dessen Einrückstellung beaufschlagt wird. Bei dieser Gestaltung wird somit über das eine Seil die Verbindung von Blende und Übertragungsstange entrastet und es kann zudem mittels dieses Seiles die Blende angehoben, d.h. hochgezogen werden, während das andere Seil zumindest dem Zweck dient, den Zapfen in Richtung der Einrückstellung zu beaufschlagen. Die Blende kann dabei aufgrund ihres Eigengewichtes absinken, so daß nur das erneute Rastieren von Blende und Übertragungsstange erforderlich ist. Als besonders vorteilhaft wird es aber angesehen, wenn das Lagerteil als schwenkbar in der Blende gelagerter Winkelhebel ausgebildet ist, dessen einer Schenkel im Bereich seines freien Endes den Zapfen senkrecht zur Stellrichtung der Blende schwenkbar aufnimmt und an dessen anderem Schenkel die beiden Seile angreifen, wobei das Seil zum Beaufschlagen des Zapfens in Schließstellung auf der der Zugseite abgewandten Seite des anderen Schenkels an der Übertragungsstange oder einem Ansatz an der Übertragungsstange umgelenkt ist. Der Umlenkung des anderen Seiles kommt insofern Bedeutung zu, weil über dieses Seil eine nach unten gerichtete Kraft auf die Blende ausgeübt werden kann mit der Folge, daß die Blende nicht nur in die Rastposition relativ zur Übertragungsstange verschoben wird, sondern über dieses andere Seil auch die Kraft in den Zapfen zum Rastieren von Blende und Übertragungsstange eingeleitet wird, womit eine Rastkontrolle möglich ist. Statt zweier Seile könnte selbstverständlich auch eine Stange vorgesehen sein. Die Verwendung zweier Seile wird aber als vorteilhafter angesehen, da dies die Möglichkeit eröffnet, den Ort, an dem die Bedienperson an den beiden Seilen angreift, weitgehend beliebig zu wählen, d.h. entsprechend den räumlichen Gegebenheiten des Flüssigkeitsbehälters und dessen Zuganges beliebig anzuordnen ist. Eine Unlenkung bei Bauwerksecken ist dadurch möglich.

Gemäß einer zweiten besonderen Gestaltung der Erfindung ist vorgesehen, daß die Blende um eine oberhalb der Auslauföffnung angeordnete Achse schwenkbar gelagert ist, wobei die Übertragungselemente einen konzentrisch zur Schwenkachse des Schwimmerarmes angeordnete erste Seilscheibe und eine konzentrisch zur Schwenkachse der Blende angeordnete zweite Seilscheibe sowie ein die Seilscheibe umschlingendes Seil aufweisen, wobei der Schwimmerarm mit der ersten Seilscheibe oder die Blende mit der zweiten Seilscheibe mittels eines in Art einer in Schließrichtung federnd vorgespannten Klauenkupplung ausgebildeten Kopplungsmittels drehfest verbindbar ist, wohingegen die andere mit dem Kopplungsmittel nicht zusammenwirkende Seilscheibe drehfest mit der Blende oder dem Schwimmerarm verbunden ist, wobei ferner das Betätigungsmittel mit Drehspiel mit der dem Kopplungsmittel zugeordneten Seilscheibe zusammenwirkt. Bei dieser Gestaltung besteht die Möglichkeit, die Blende vom Schwimmerarm entweder im Bereich der dem Schwimmerarm zugeordneten ersten Seilscheibe oder der der schwenkbaren Blende zugeordneten zweiten Seilscheibe zu entkoppeln. In aller Regel wird ersteres anzustreben sein, da die erste, obere Seilscheibe besser zugänglich ist, um in deren Bereich durch das Betätigungsmittel die Kopplung bzw. Entkopplung der Blende vom Schwimmer zu bewirken. Die vorgeschlagene Klauenkupplung ermöglicht auf einfache mechanische Art und Weise im normalen Regelfall den Kraftschluß zwischen Schwimmerarm und erster Seilscheibe herbeizuführen, wobei mittels einfacher Ausrückmittel die kraftschlüssige Trennung von Schwimmerarm und erster Seilscheibe herbeigeführt werden kann, bei nunmehr gegebener Möglichkeit, ein Drehmoment über das Betätigungsmittel in die erste Seilscheibe einzuleiten. Der Schwimmerarm verbleibt aufgrund der vorgegebenen Schwimmerposition in der entkoppelten Stellung, wohingegen die Blende über das Betätigungsmittel frei verschwenkt werden kann. Erst nach dem erneuten Einrücken der Klauenkupplung wird die Blende wieder über den Schwimmerarm angesteuert.

Eine besondere Weiterbildung der Gestaltung mit schwenkbarer Blende sieht vor, daß eine beispielsweise an einer Grundplatte befestigte Lagerhülse ein Seilscheibenkupplungsstück und ein Schwimmerarmkupplungsstück drehbar aufnimmt, deren zugewandte Kupplungsseiten mittels einer Feder aufeinanderzu vorgespannt sind, sowie konzentrisch zum Seilscheibenkupplungsstück ein als Handzugscheibe ausgebildetes Betätigungsmittel zwischen zwei Anschlägen relativ zur zugeordneten Seilscheibe verschwenkbar ist, wobei ferner die Handzugscheibe einen Ausrückkeil aufweist, der mit einem Ausrückbolzen des Schwimmerarmkupplungsstückes zusammenwirkt. Das mit Drehspiel mit der Klauenkupplung zusammenwirkende Betätigungsmittel gestattet es, zunächst das Ausrücken der beiden Kupplungsstücke durch Zusammenwirken von Ausrückkeil und Ausrückbolzen herbeizuführen, bevor über das Betätigungsmittel die erste Seilscheibe mit einer Drehkraft beaufschlagt wird. Der wesentliche Vorteil der Gestaltung ist darin zu sehen, daß der Schwimmerarm und damit der Schwimmer nicht mitbewegt werden muß.

Weitere Merkmale der Erfindung sind in der Beschreibung der Figuren und den Figuren dargestellt, wobei bemerkt wird, daß alle beschriebenen bzw. gezeigten Einzelmerkmale und Kombinationen von Einzelmerkmalen erfindungswesentlich sind.

In den Figuren ist die Erfindung an zwei Ausführungsformen beispielsweise dargestellt, ohne auf diese Ausführungsformen beschränkt zu sein. Es zeigt:
- Figur 1: eine erste Ausführungsform des erfindungsgemäßen Abflußreglers mit vertikal beweglicher Blende, in einer Ansicht gesehen,
- Figur 2: eine Seitenansicht des erfindungswesentlichen Teiles des in Figur 1 gezeigten Reglers, in vergrößerter Darstellung,
- Figur 3: eine vergrößerte Darstellung der Ansicht nach Figur 1 für den erfindungswesentlichen Teil des Reglers,
- Figur 4: eine zweite Ausführungsform des erfindungsgemäßen Abflußreglers, bei dem eine mittels eines Seilzuges verschwenkbare Blende Verwendung findet, nur für den erfindungsgemäßen Bereich des Reglers in einer Ansicht veranschaulicht,
- Figur 5: einen zentralen Schnitt durch den in Figur 4 gezeigten Regler, bei nicht ausgerückter Kupplung,
- Figur 6: eine Darstellung gemäß Figur 5, jedoch bei ausgerückter Kupplung und
- Figur 7: die Abwicklung des bei der Kupplung Verwendung findenden Ausrückkeiles.

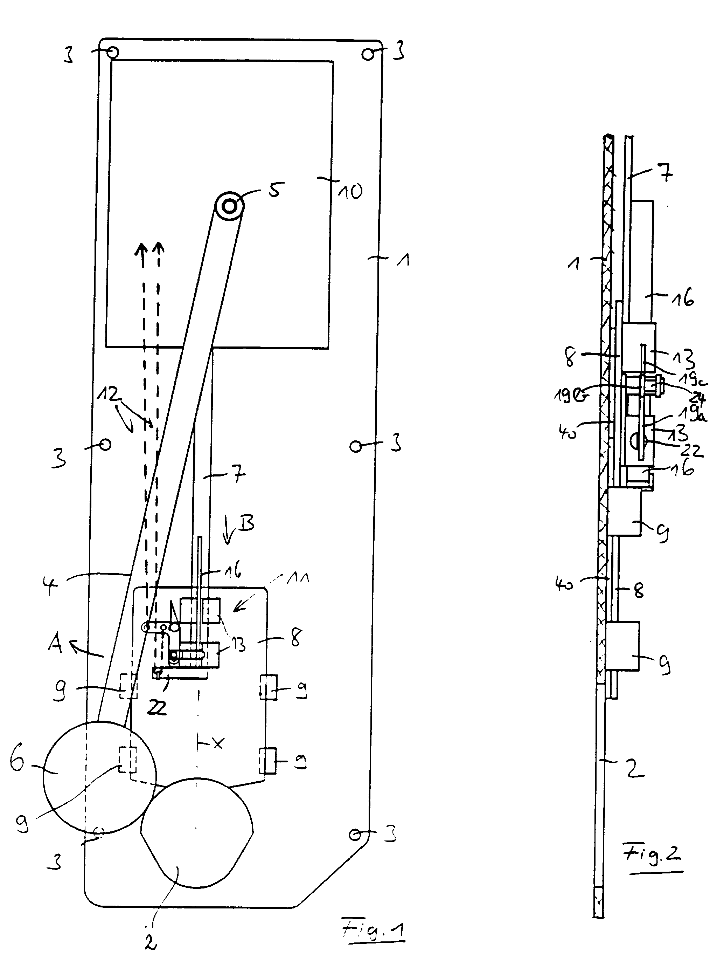

Die in den Figuren 1 bis 3 gezeigte Ausführungsform des erfindungsgemäßen Abflußreglers weist eine Grundplatte 1 auf, mit einer in derem unteren Bereich angeordneten Öffnung 2. Die Grundplatte 1 wird üblicherweise an einer Ablaufwand eines Behälters angebracht, entsprechend des zu regelnden Abflusses ist die Öffnung 2 in der Grundplatte 1 ausgebildet. Mehrere Löcher 3 in der Grundplatte dienen deren Befestigung an der Ablaufwand. Im oberen Bereich der Grundplatte 1 ist ein Schwimmerarm 4 um eine mit der Grundplatte 1 fest verbundene, horizontale Achse 5 schwenkbar gelagert. An seinem freien Ende nimmt der Schwimmerarm 4 einen Schwimmer 6 auf, der in der Darstellung der Figur 1 in seiner unteren Endstellung bei leergelaufenem Flüssigkeitsbehälter gezeigt ist. Bei einem Flüssigkeitseinstau in den Behälter folgt der Schwimmer 6 dem Flüssigkeitsniveau, d.h. es schwenkt der Schwimmerarm 4 in Richtung des Pfeiles A. Zwischen dem Schwimmerarm 4 und der Grundplatte 1 ist eine Übertragungsstange 7 angeordnet, deren unteres Ende mit einer im wesentlichen rechteckförmig gestalteten Blende 8 zusammenwirkt. Im normalen Regelbetrieb ist die Übertragungsstange 7 im Bereich ihres unteren Endes fest mit der Blende 8 verbunden, die ihrerseits entlang ihrer Längsseiten zwischen vier, jeweils paarweise angeordneten Lagerklötzen 9 sowohl seitlich als auch senkrecht zur Zeichenebene geführt ist. Zwischen der Blende 8 und der Grundplatte 1 befindet sich eine Gleitzwischenlage 40. Bei einer Schwenkbewegung des Schwimmerarmes 4 in Richtung des Pfeiles A bewegt sich damit die Blende 8 in Richtung des Pfeiles B nach unten. An ihrem unteren Ende ist die Blende 8 mit einer nach oben gerichteten Wölbung versehen, die der oberen Wölbung der Öffnung 2 in der Grundplatte 1 entspricht. In der untersten Stellung, des Schwimmers 6 schließt der untere, gewölbte Abschnitt der Blende 8 mit dem oberen Abschnitt der Öffnung 2 ab. Um eine Zustellbewegung der Blende 8 entsprechend der hydraulischen Verhältnisse beim Einstau in den Flüssigkeitsbehälter zu erzielen, sind bei dem Abflußregler das obere Ende der Übertragungsstange 7 und das der Achse zugewandte Ende des Schwimmerarmes 4 über eine Steuerkurve miteinander gekoppelt. Die Übertragung einer solchen unproportionalen Bewegung des Schwimmerarmes 4 auf die Übertragungsstange 7 ist aus dem Stand der Technik bekannt, die entsprechenden Bauelemente, die sich unter einer Abdeckung 10 befinden, sind daher nicht näher gezeigt.

Bei dem insoweit beschriebenen, bekannten Abflußregler sind die Bewegungen von Schwimmer 6 und Blende 8 zwangsgekoppelt, d.h. es kann die Blende 8 nicht unabhängig vom Schwimmer 6 bewegt werden und umgekehrt. Um dieses zu ermöglichen, ist bei der in den Figuren 1 bis 3 gezeigten Ausführungsform ein Kopplungsmittel 11 zum Koppeln bzw. Entkoppeln von Übertragungsstange 7 und Blende 8 vorgesehen, ferner ein Betätigungsmittel 12 zum Bewegen der Blende 8 nach dem Entkoppeln vom Schwimmer 6.

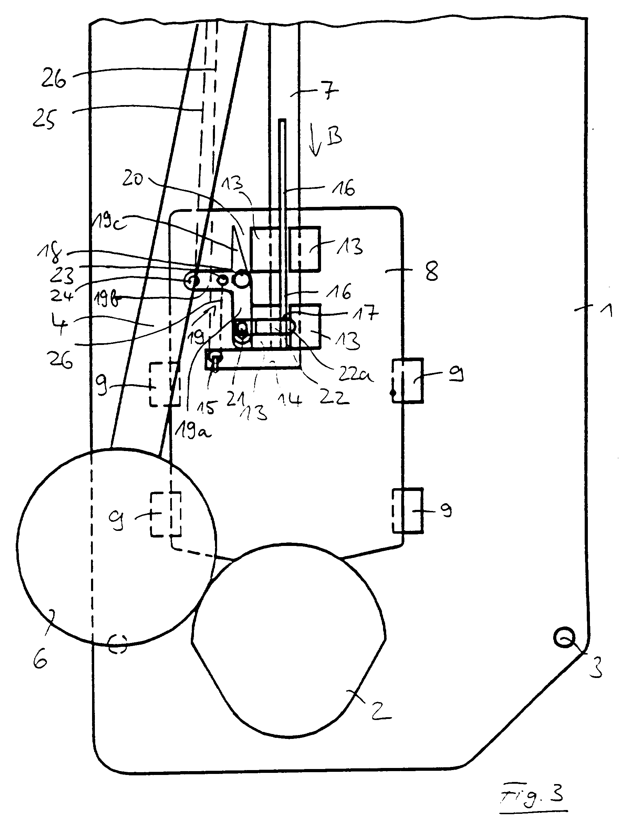

Im Detail weist die Blende 8 symmetrisch zu ihrer Längsmittelachse jeweils ein Paar von Lagerklötzen 13 auf, zwischen denen die Übertragungsstange 7 seitlich und senkrecht zur Blattebene geführt ist, so daß sie sich nur in Richtung des Pfeiles B oder entgegengesetzt bewegen kann. An ihrem unteren Ende ist die Übertragungsstange 7 mit einem Winkelstück 14 versehen, das einen der Öffnung 2 zugewandten Lagerklotz 13 hintergreift und mit seinem freien Ende über diesen hinaussteht. Am freien Ende des Winkelstückes 14 ist eine Umlenkrolle 15 befestigt. Mit dem unteren Abschnitt der Übertragungsstange 7 ist eine Rastplatte 16 verbunden, die sich in der Verschieberichtung B der Übertragungsstange 7 erstreckt und zwischen dem oberen und dem unteren Paar von Lagerklötzen 13 angeordnet ist. Senkrecht zur Hauptfläche weist die Rastplatte 16 zumindest eine Ausnehmung 17 auf, gegebenenfalls kann sie über ihre Länge auch mehrere Ausnehmungen 17 aufweisen. Zwischen den oberen und unteren Lagerklötzen 13 ist seitlich zu diesen ein vertikal und zur Blende 8 orientierter Lagerbolzen 18 mit dieser verbunden, der einen Winkelhebel 19 schwenkbar aufnimmt. Mittels einer nicht näher gezeigten Drehfeder wird der Winkelhebel 19 entgegen dem Uhrzeigersinn beaufschlagt, so daß dessen Schenkel 19a dann, wenn der Winkelhebel 19 sonst unbeeinflußt ist, am vom Winkelstück 14 hintergriffenen Lagerklotz 13 anliegt, d.h. in Längsrichtung der Übertragungsstange 7 orientiert ist, während der andere Winkelhebel 19b senkrecht zum Schenkel 19a orientiert und von der Übertragungsstange 7 weggerichtet ist. Zusätzlich weist der Winkelhebel 19 auf seiner dem Schenkel 19a abgewandten Seite einen Keilansatz 19c auf, der in den Figuren 1 und 3 gezeigten Stellung des Winkelhebels 19 einen Keilspalt zwischen sich und dem zugewandten oberen Lagerklotz 13 freiläßt, so daß entsprechend dem Winkel des Keilspaltes 20 eine Verschwenkung des Winkelhebels 19 im Uhrzeigersinn möglich ist.

Der Schenkel 19a des Winkelhebels 19 ist im Bereich seines freien Endes mit einer Längsnut versehen, die einen Lagerbolzen 21 für einen Rastierzapfen 22 aufnimmt. Dieser Rastierzapfen durchsetzt parallel zum Schenkel 19b gerichtet eine Durchgangsbohrung in dem dem Winkelstück 14 zugeordneten Lagerklotz 13 und greift mit seinem vorderen, sich verjüngenden Ende 22a in die Ausnehmung 17 der Übertragungsstange 7 ein. Schließlich weist der Schenkel 19b des Winkelhebels 19 in geringfügigem Abstand zum Lagerbolzen 18 ein Loch 23 und im Bereich seines freien Endes ein weiteres Loch 24 auf. Am Loch 24 greift ein erstes, nach oben gerichtetes Betätigungsseil 25 an, am Loch 23 ein zweites, nach unten gerichtetes Betätigungsseil 26, wobei dieses Betätigungsseil 26 um die Umlenkrolle 15 geführt und von dort entsprechend der Orientierung des Betätigungsseiles 25 nach oben gerichtet ist. Beide Betätigungsseile 25 und 26 sind in den Figuren 1 und 3 mit strichlierten Linien verdeutlicht, aus Gründen besserer Klarheit der Zeichnung wurde in der Darstellung der Figur 2 auf eine Verdeutlichung der Betätigungsseile verzichtet.

Aufgrund des vorstehend beschriebenen Aufbaues des Abflußreglers ergibt sich folgende Wirkungsweise: Im Normalbetrieb, d.h. bei nicht betätigten Seilen 25 bzw. 26 regelt der Abflußregler die Stellung der Blende 8 über den Schwimmer 6. Bei relativ geringem Einstau von Flüssigkeit in den Flüssigkeitsbehälter ist der Schwimmer 6 relativ weit abgesenkt und die Blende relativ weit angehoben (wie in den Figuren 1 und 3 veranschaulicht), bei relativ großem Einstau ist der Schwimmer relativ hoch angehoben, d.h. die Schwimmerstange um einen Winkel von etwa 150° nach oben geschwenkt und die Blende 8 aufgrund des Steuerungsmechanismus zwischen Schwimmerstange 4 und Übertragungsstange 7 weitreichend abgesenkt, so daß bezüglich der Öffnung 2 nur ein geringer, nicht abgeblendeter Querschnitt verbleibt. Ist dieser geringe Querschnitt beispielsweise verlegt, kann unabhängig von der angehobenen Position des Schwimmers 6 die Blende 8 angehoben werden, indem eine Bedienperson am Seil 25 zieht. Ein Zug auf das Seil 25 bewirkt, daß der Winkelhebel 19 im Uhrzeigersinn schwenkt, womit der Rastierzapfen 22 aus der Ausnehmung 17 der Rastplatte 16 herausgezogen wird, so daß bei einem weiteren Hochziehen des Betätigungsseiles 25 die Blende 8 über die Krafteinleitung in den Winkelhebel und dessen Lagerbolzen 8 angehoben werden kann. Das Nachuntenschieben der Blende 8 kann entweder aufgrund Eigengewichtes der Blende 8 erfolgen, in aller Regel ist aber davon auszugehen, daß hierfür eine kräftemäßige Unterstützung erforderlich ist. Dies geschieht, indem nunmehr das umgelenkte Betätigungsseil 26 gezogen wird, das umgelenkte Seil leitet eine Kraft auf den Winkelhebel entgegengesetzt dem Uhrzeigersinn ein, was zur Folge hat, daß der Winkelhebel 19 und damit die Blende nach unten gezogen wird und in der unteren Stellung, sobald das Winkelstück 14 in Anlage mit dem zugeordneten Lagerklotz 13 gelangt, der Rastierzapfen 22 wieder in die Rastplatte 16 einrastet.

Bei der in den Figuren 4 bis 7 beschriebenen Ausführungsform ist nur derjenige Bereich des Abflußreglers gezeigt, der die in der Grundplatte 1 drehbare, schwimmerseitige Seilscheibe 27 aufweist. Unterhalb der schwimmerseitigen Seilscheibe 27 ist eine weitere Seilscheibe in der Grundplatte 1 drehbar gelagert, mit dieser Seilscheibe ist die Blende starr verbunden, d.h. sie wird entsprechend der Schwenkbewegung der unteren Seilscheibe bewegt. Die Blende ist in bekannter Art und Weise an ihrer Unterseite mit einer Steuerkurve versehen. Die Kraftübertragung zwischen den beiden Seilscheiben folgt mittels eines umlaufenden Seiles 26 das in der Darstellung der Figuren 4 bis 6 nur teilweise gezeigt ist. Der insofern beschriebene Abflußregler mit der verschwenkbaren Blende ist aus dem Stand der Technik bekannt und bedarf insofern keiner weiteren Erläuterung.

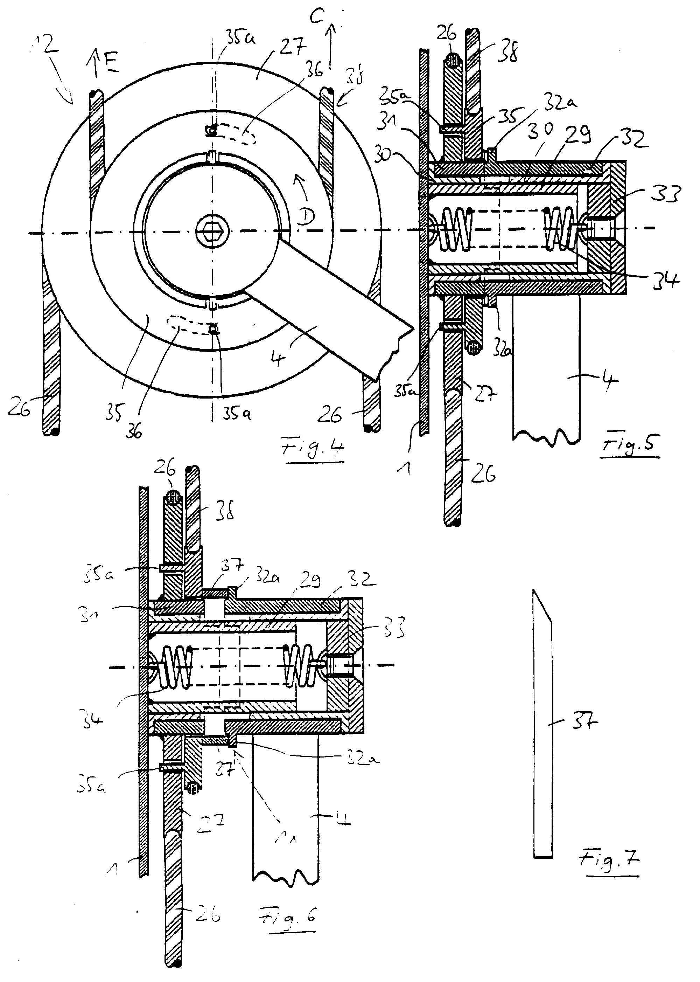

Bei dem Abflußregler mit der schwenkbaren Blende ist die Seilscheibe 27 über eine Klauenkupplung mit dem Schwimmerarm 4 verbunden. Eine Lagerhülse 29 ist mit der Grundplatte 1 verschweißt und bildet die Drehachse für den Schwimmerarm 4. Die Lagerhülse 29 umgibt ein Gleitlager in Form zweier Gleithülsen 30, die zwischen sich einen Ringspalt freilassen. Auf die grundplattenseitige Gleithülse 30 ist ein hülsenförmiges Seilscheibenkupplungsstück 31 aufgesteckt und auf die grundplattenferne Gleithülse 30 ein hülsenförmiges Schwimmerarmkupplungsstück 32. Das Kupplungsstück 31 stellt dabei den Kupplungsvater dar, das Kupplungsstück 32 die Kupplungsmutter. Der Verlauf der Vor- bzw. Rücksprünge der zu kuppelnden Stücke ist in der Darstellung der Figur 5 mit einer strichlierten Linie verdeutlicht. Das Schwimmerarmkupplungsstück 32 bzw. der diesem zugewandte erweiternde Teil der Gleithülse 30 ist mit einer Kappe 33 verschlossen. Innerhalb der Lagerhülse 29 ist eine Zugfeder angeordnet, die einerseits an der Kappe 33, andererseits an der Grundplatte 1 angreift, so daß sie die beiden Kupplungsstücke 31 und 32 gegeneinander verspannt. Mit dem Schwimmerarmkupplungsstück 32 ist der Schwimmerarm 4 verschweißt, mit dem Seilscheibenkupplungsstück 31 ist die Seilscheibe 27 verschweißt. Auf der dem Kupplungsstück 32 zugewandten Seite nimmt das Kupplungsstück 31 eine Handzugscheibe 35 drehbar auf. Diese ist auf ihrer der Seilscheibe 27 zugewandten Seite mit zwei diametral zur Drehachse der Handzugscheibe 35 und der Seilscheibe 27 angeordneten Mitnehmern 35a versehen, wobei jeder Mitnehmer 35a in eine bogenförmig verlaufende Ausnehmung 36 in der Seilscheibe 27 eingreift, so daß eine relative Schwenkbewegung von Handzugsscheibe 35 und Seilscheibe 27 in etwa über die Länge der jeweiligen Ausnehmung 36 möglich ist. Auf der den Mitnehmern 35a abgewandten Seite ist die Handzugscheibe 35 mit zwei Ausrückkeilen 37 versehen, die sich auf einem konzentrischen Kreis zur Drehachse der Handzugscheibe 35 über etwas weniger als einen Halbkreis erstrecken. Bezogen auf eine Drehrichtung der Handzugscheibe ist das vorlaufende Ende des jeweiligen Ausrückkeiles 37 keilförmig ausgebildet, während der weitgehende Bogen des Ausrückkeiles 37 eine konstante Stärke aufweist und das andere Ende abrupt endet. Die Abwicklung eines der beiden Ausrückkeile 37 ist in der Darstellung der Figur 7 gezeigt. Zwischen dem keilförmigen Ende eines Ausrückkeiles 37 und dem stumpfen Ende des angrenzenden anderen Ausrückkeiles 37 verbleibt ein solcher Platz, daß bei gekuppeltem Schwimmerarm 4, d.h. eingerückter Kupplung, zwei diametrale Ansätze in Form von Ausrückbolzen 32a, die am Schwimmerarmkupplungsstück 32 befestigt sind, zwischen die Ausrückkeile 37 eingreifen.

Die Handzugscheibe 35 umschlingt ein Betätigungsseil 38. Dieses kann frei betätigbar sein oder eine an beliebiger aber gut zugänglicher Stelle angeordnete weitere Scheibe umschließen, die beispielsweise mittels einer Handkurbel drehbar ist.

Im normalen Regelbetrieb wirkt bei dem Abflußregler gemäß dieser Ausführungsform der Schwimmer über den Schwimmerarm 4 auf das Schwimmerarmkupplungsstück 32 ein und dieses über dessen Kupplungsklauen mit den Kupplungsklauen des Seilscheibenkupplungsstückes 31 zusammen. Von der festen Verbindung zwischen diesem Kupplungsstück 31 und der Seilscheibe 27 wird die Bewegung des Schwimmerarmes 4 auf die Seilscheibe 27 und damit über das Betätigungsseil 26 auf die unterhalb angeordnete Seilscheibe mit der drehfest verbundenen Blende übertragen. Die Details betreffend diesen Zustand sind, bezogen auf die obere Seilscheibe 27, in der Figur 5 verdeutlicht. Die ausgerückte Stellung der Kupplung ist in Figur 6 gezeigt. Wird das Betätigungsseil 38 in Richtung des Pfeiles C gezogen, bewegt sich entsprechend die Handzugscheibe 35 mit dem Ausrückkeil 37 in Richtung des Pfeiles D, so daß durch die Einwirkung der Keilflächen der Ausrückkeile 37 auf die Ausrückbolzen 32a das Schwimmerarmkupplungsstück 32 entgegen der Kraft der Zugfeder 34 aus den Klauen des Seilscheibenkupplungsstückes 31 abgehoben wird. Die Längserstreckung der beiden Ausnehmungen 36 ist dabei so bemessen, daß die Mitnehmer 35a erst dann die Seilscheibe 27 mitnehmen, wenn die Ausrückung stattgefunden hat, d.h. über den Kraftschluß von in Richtung des Pfeiles C gezogenem Betätigungsseil 38, Handzugscheibe 35 und Mitnehmer 35a wird die Seilscheibe 27 verschwenkt, die die Verschwenkung der Blende bewirkt. Zum Rastieren der beiden Kupplungsstücke 31 und 32 wird das Betätigungsseil 38 in Richtung des Pfeiles E gezogen, es laufen dann die Vorgänge im umgekehrten Sinne ab.

## Patentansprüche

1. Abflußregler für Ausläufe aus Flüssigkeitsbehältern, insbesondere Regenrückhalteräumen, mit dem eine Auslauföffnung (2) des Behälters mittels einer Blende (8) in Abhängigkeit vom Flüssigkeitsniveau im Behälter mehr oder weniger abgeblendet bzw. freigegeben wird, wobei die Blende (8) über einen Antrieb (6) gesteuert wird, der mittels Übertragungselementen (4,7) mit der Blende (8) verbunden ist, dadurch gekennzeichnet, daß mindestens ein Kopplungsmittel (11) zum Entkoppeln bzw. Koppeln von Antrieb (6) und Blende (8) sowie mindestens ein Betätigungsmittel (12) zum Bewegen der Blende (8) nach dem Entkoppeln von Antrieb (6) und Blende (8) vorgesehen sind.

2. Abflußregler nach Anspruch 1, dadurch gekennzeichnet, daß die Entkopplung bzw. Kopplung von Antrieb (6) und Blende (8) zwischen den Übertragungselementen (4, 7) und der Blende (8) erfolgt.

3. Abflußregler nach Anspruch 1, dadurch gekennzeichnet, daß die Entkopplung bzw. Kopplung von Antrieb (6) und Blende (8) zwischen den Übertragungselementen (4, 32, 31, 27, 26) erfolgt.

4. Abflußregler nach einem der Ansprüche 1 bis 3, dadurch gekennzeichnet, daß das Betätigungsmittel (12) ein oder mehrere Seile (25, 26; 38) oder Stangen aufweist.

5. Abflußregler nach einem der Ansprüche 1 bis 4, dadurch gekennzeichnet, daß der Antrieb (6) als Schwimmer ausgebildet ist.

6. Abflußregler nach einem der Ansprüche 1 bis 5, dadurch gekennzeichnet, daß die Blende (8) über der Auslauföffnung (2) vertikal beweglich geführt ist, wobei die Übertragungselemente (4, 7) einen um eine stationäre Achse (5) schwenkbaren Schwimmerarm (4) sowie eine zwischen Schwimmerarm (4) und Übertragungsstange (7) angeordnete Steuerung aufweisen, wobei ferner die Blende (8) in deren Stellrichtung relativ zur Übertragungsstange (7) verschiebbar gelagert ist, und das mindestens eine zwischen Übertragungsstange (7) und Blende (8) wirksame Kopplungsmittel (11) in einer ersten Stellung die Blende (8) und die Übertragungsstange (7) in Stellrichtung der Blende (8) verbindet, sowie in einer zweiten Stellung in Stellrichtung der Blende (8) entkoppelt, wobei weiterhin das mindestens eine Betätigungsmittel (12) zum Bewegen der Blende (8) an dieser und/oder dem Kopplungsmittel (11) angreift.

7. Abflußregler nach Anspruch 6, dadurch gekennzeichnet, daß das Kopplungsmittel (11) als in der Blende (8) gelagerter Zapfen (22) ausgebildet ist, der in seiner ersten Stellung in die Übertragungsstange (7, 16) eingreift und in seiner zweiten Stellung aus der Übertragungsstange (7, 16) ausgerückt ist, wobei die Betätigungsmittel (12) zwei Seile (25, 26) umfassen, die an einem Lagerteil (19) für den Zapfen (22) angreifen, derart, daß bei Betätigung eines Seiles (25) der Zapfen (22) ausgerückt und über das Lagerteil (19) die Blende (8) angehoben wird, und bei Betätigung des anderen Seiles (26) der Zapfen (22) in Richtung von dessen Einrückstellung und zum Einrücken selbst beaufschlagt wird.

8. Abflußregler nach Anspruch 7, dadurch gekennzeichnet, daß das Lagerteil (19) als schwenkbar in der Blende (8) gelagerter Winkelhebel ausgebildet ist, dessen einer Schenkel (19a) im Bereich seines freien Endes den Zapfen (22) senkrecht zur Stellrichtung der Blende (8) schwenkbar aufnimmt und an dessen anderem Schenkel (19b) die beiden Seile (25, 26) angreifen, wobei das Seil (26) zum Beaufschlagen des Zapfens (22) in Schließrichtung auf der der Zugseite abgewandten Seite des anderen Schenkels (19b) an der Übertragungsstange (7) oder einem Ansatz (14) der Übertragungsstange (7) umgelenkt ist.

9. Abflußregler nach einem der Ansprüche 1 bis 5, dadurch gekennzeichnet, daß die Blende (8) um eine oberhalb der Auslauföffnung (2) angeordnete Achse (29) schwenkbar gelagert ist, wobei die Übertragungselemente (4, 32, 31, 27, 26) eine konzentrisch zur Schwenkachse des Schwimmerarmes (4) angeordnete erste Seilscheibe (27) und eine konzentrisch zur Schwenkachse der Blende angeordnete zweite Seilscheibe, sowie ein die Seilscheibe umschlingendes Seil (26) aufweisen, wobei der Schwimmerarm (4) mit der ersten Seilscheibe (27) oder die Blende mit der zweiten Seilscheibe mittels eines in Art einer in Schließrichtung federvorgespannten Klauenkupplung ausgebildeten Kopplungsmittels (11) drehfest verbindbar ist, wohingegen die andere mit dem Kopplungsmittel (11) nicht zusammenwirkende Seilscheibe drehfest mit der Blende oder dem Schwimmerarm (4) verbunden ist, wobei ferner das Betätigungsmittel (12) mit Drehspiel mit der dem Kopplungsmittel (11) zugeordneten Seilscheibe (27) zusammenwirkt.

10. Abflußregler nach Anspruch 9, dadurch gekennzeichnet, daß die Klauenkupplung (31, 32) mit der dem Schwimmerarm (4) zugeordneten ersten Seilscheibe (27) zusammenwirkt.

11. Abflußregler nach Anspruch 9 oder 10, dadurch gekennzeichnet, daß eine Lagerhülse (29) ein Seilscheibenkupplungsstück (31) und ein Schwimmerarmkupplungsstück (32) drehbar aufnimmt, deren zugewandte Kupplungsseiten mittels einer Feder (34) aufeinanderzu vorgespannt sind, sowie konzentrisch zum Seilscheibenkupplungsstück (31) ein als Handzugscheibe (35) ausgebildetes Betätigungsmittel (12) zwischen zwei Anschlägen (36) relativ zur zugeordneten Seilscheibe (27) verschwenkbar ist, wobei ferner die Handzugscheibe (35) einen Ausrückkeil (37) aufweist, der mit einem Ausrückbolzen (32a) des Schwimmerarmkupplungsstückes (32) zusammenwirkt.

## Claims

1. Outflow controller for outlets from liquid containers, especially stormwater retention chambers, with which an outlet opening (2) of the container is covered or exposed to a greater or lesser extent by means of a shutter (8) as a function of the liquid level in the container, the shutter (8) being controlled by means of a drive (6) which is connected to the shutter (8) by means of transmission elements (4, 7), characterized in that at least one coupling means (11) for coupling and decoupling the drive (6) and the shutter (8), and at least one actuating means (12) for moving the shutter (8) after the decoupling of the drive (6) and the shutter (8) are provided.

2. Outflow controller according to Claim 1, characterized in that the coupling and decoupling of the drive (6) and the shutter (8) takes place between the transmission elements (4, 7) and the shutter (8).

3. Outflow controller according to Claim 1, characterized in that the coupling and decoupling of the drive (6) and the shutter (8) takes place between the transmission elements (4, 32, 31, 27, 26).

4. Outflow controller according to one of Claims 1 to 3, characterized in that the actuating means (12) has one or more cables (25, 26; 38) or rods.

5. Outflow controller according to one of Claims 1 to 4, characterized in that the drive (6) is designed as a float.

6. Outflow controller according to one of Claims 1 to 5, characterized in that the shutter (8) is guided in vertically movable fashion over the outlet opening (2), the transmission elements (4, 7) having a float arm (4) which is pivotable about a fixed pivot (5) and a control mechanism arranged between the float arm (4) and the transmission rod (7), the shutter (8) furthermore being mounted so as to be displaceable relative to the transmission rod (7) in its direction of actuation, and the coupling means (11), of which there is at least one, acting between the transmission rod (7) and the shutter (8) connecting the shutter (8) and the transmission rod (7) in the direction of actuation of the shutter (8) in a first position and decoupling them in the direction of actuation of the shutter (8) in a second position, the actuating means (12), of which there is at least one, for moving the shutter (8) furthermore engaging on the said shutter and/or the coupling means (11).

7. Outflow controller according to Claim 6, characterized in that the coupling means (11) is designed as a stud (22) which is mounted in the shutter (8), engages in the transmission rod (7, 16) in its first position and is disengaged from the transmission rod (7, 16) in its second position, the actuating means (12) comprising two cables (25, 26) which engage on a bearing part (19) for the stud (22) such that, when one cable (25) is actuated, the stud (22) is disengaged and the shutter (8) is raised by means of the bearing part (19) and, when the other cable (26) is actuated, the stud (22) is acted upon in the direction of its engagement position and so as actually to engage.

8. Outflow controller according to Claim 7, characterized in that the bearing part (19) is designed as a bell crank lever which is mounted pivotably in the shutter (8) and one limb (19a) of which receives in the region of its free end, the stud (22) in such a way that it can be pivoted perpendicularly to the direction of actuation of the shutter (8) and on the other limb (19b) of which the two cables (25, 26) engage, the cable (26) for acting on the stud (22) in the closing direction being reversed at the transmission rod (7) or a projection (14) from the transmission rod (7) on that side of the other limb (19b) which is remote from the pulling side.

9. Outflow controller according to one of Claims 1 to 5, characterized in that the shutter (8) is mounted so as to be pivotable about a pivot (29) arranged above the outlet opening (2), the transmission elements (4, 32, 31, 27, 26) having a first cable pulley (27) arranged concentrically with respect to the pivoting axis of the float arm (4), a second cable pulley arranged concentrically with respect to the pivoting axis of the shutter, and a cable (26) wrapped around the cable pulley, the float arm (4) being connectable fixedly in terms of rotation to the first cable pulley (27), or the shutter being connectable fixedly in terms of rotation to the second cable pulley, by means of a coupling means (11) in the form of a claw clutch spring-loaded in the closing direction, whereas the other cable pulley, which does not interact with the coupling means (11), is connected fixedly in terms of rotation to the shutter or the float arm (4), the actuating means (12) furthermore interacting with rotary play with the cable pulley (27) assigned to the coupling means (11).

10. Outflow controller according to Claim 9, characterized in that the claw clutch (31, 32) interacts with the first cable pulley (27), the cable pulley assigned to the float arm (4).

11. Outflow controller according to Claim 9 or 10, characterized in that a bearing sleeve (29) carries a cable-pulley clutch piece (31) and a float-arm clutch piece (32) in such a way that they are rotatable, the facing clutch sides of the said pieces being preloaded towards one another by means of a spring (34), and an actuating means (12) designed as a hand wire pull pulley (35) is pivotable between two stops (36) relative to the associated cable pulley (27), the hand wire pull pulley (35) having a disengaging wedge (37) which interacts with a disengaging pin (32a) of the float-arm clutch piece (32).

## Revendications

1. Régulateur pour les sorties de réservoir de liquide, notamment des bacs de rétention d'eau de pluie grâce auquel on peu occulter ou libérer plus ou moins un orifice d'évacuation (2) de la cuve au moyen d'un écran (8) en fonction du niveau du liquide dans la cuve, l'écran (8) étant commandé par un entraînement (6) qui est relié à l'écran (8) par des éléments de transmission (4, 7), caractérisé en ce qu'on prévoit au moins un moyen d'accouplement (11) pour débrayer ou embrayer l'entraînement (6) et l'écran (8) ainsi qu'au moins un organe de commande (12) pour déplacer l'écran (8) après le débrayage de l'entraînement (6) et de l'écran (8).

2. Régulateur d'écoulement selon la revendication 1, caractérisé en ce que le débrayage ou l'embrayage de l'entraînement (6) et de l'écran (8) est réalisé entre les éléments de transmission (4, 7) et l'écran (8).

3. Régulateur d'écoulement selon la revendication 1, caractérisé en ce que le débrayage ou l'embrayage de l'entraînement (6) et de l'écran (8) est réalisé entre les éléments de transmission (4, 32, 31, 27, 26).

4. Régulateur d'écoulement selon l'une des revendications 1 à 3, caractérisé en ce que le moyen de commande (12) présente un ou plusieurs câbles (25, 26, 38).

5. Régulateur d'écoulement selon l'une des revendications 1 à 4, caractérisé en ce que l'entraînement (6) est sous forme de flotteur.

6. Régulateur d'écoulement selon l'une des revendications 1 à 5, caractérisé en ce que l'écran (8) est guidé verticalement en coulissement devant l'orifice de sortie d'évacuation (2) où les éléments de transmission (4, 7) présentent un bras de flotteur (4) pivotable autour d'un axe fixe (5), ainsi qu'une commande disposée entre le bras de flotteur (4) et la tige de transmission (7), où en outre l'écran (8) est logé en coulissement dans son sens de réglage par rapport à la tige de transmission (7) et au moins un moyen d'embrayage (11) efficace entre une tige de transmission (7) et l'écran (8) relie dans une première position l'écran (8) et la tige de transmission (7) dans le sens de réglage de l'écran (8), et il débraye dans une deuxième position dans le sens de réglage de l'écran (8), où en outre au moins un moyen de commande (12) vient en prise pour y déplacer l'écran (8) et/ou sur le moyen d'embrayage (11).

7. Régulateur d'écoulement selon la revendication 6, caractérisé en ce que le moyen d'embrayage (11) est constitué d'un tourillon (22) logé dans l'écran (8) qui, dans sa première position vient en prise dans la tige de transmission (7, 16) et dans sa deuxième position est reculé de la tige de transmission (7, 16), où les moyens de commande (12) comprennent deux câbles (25, 26) qui viennent en prise sur une pièce de palier (19) pour le tourillon (22), de sorte que par actionnement d'un câble (25), le tourillon (22) est reculé et par la pièce de palier (19) l'écran (8) est soulevé et par actionnement de l'autre câble (26) le tourillon (22) est soumis lui-même au recul dans le sens de sa position de recul.

8. Régulateur d'écoulement selon la revendication 7, caractérisé en ce que la pièce de palier (19) est en forme de levier en équerre logé en pivotement sur l'écran (8) dont une branche (19a) reçoit en pivotement dans le domaine de son extrémité libre le tourillon (22) perpendiculairement au sens de réglage de l'écran (8) et sur son autre branche (19b) les deux câbles (25, 26) viennent en prise, où le câble (26) pour mettre en prise le tourillon (22) dans le sens de fermeture est dévié sur la face opposée au côté de traction de l'autre branche (19b) sur la tige de transmission (7) ou sur un prolongement (14) de la tige de transmission (7).

9. Régulateur d'écoulement selon l'une des revendications 1 à 5, caractérisé en ce que l'écran (8) est logé en pivotement sur un axe (29) placé au-dessus de l'orifice de sortie d'évacuation (2), où les éléments de transmission (4, 32, 31, 27, 26) présentent une première poulie (27) placée concentriquement à un axe de pivotement du bras de flotteur (4) et une deuxième poulie disposée concentriquement à l'axe de pivotement de l'écran, ainsi qu'un câble (26) qui entoure la poulie ou le bras de pivotement (4) peut être relié de manière solidaire en rotation à la première poulie (27) ou l'écran à la deuxième poulie au moyen d'un embrayage (11) en forme d'embrayage à griffes sous la contrainte d'un ressort dans le sens de fermeture, par contre l'autre poulie ne coopérant pas avec l'embrayage (11) est reliée solidairement à l'écran ou au bras de flotteur (4), où en outre l'organe de commande (12) coopère avec un jeu en rotation avec la poulie (27) associée à l'embrayage (11).

10. Régulateur selon la revendication 9, caractérisé en ce que l'embrayage à griffes (31, 32) coopère avec la première poulie (27) associée au bras de flotteur (4).

11. Régulateur d'écoulement selon la revendication 9 ou 10, caractérisé en ce qu'une gaine de palier (29) loge en rotation une pièce d'embrayage de la poulie à câble (31) et une pièce d'embrayage du bras de flotteur (32), dont les flans d'embrayage dirigés l'un vers l'autre sont rapprochés l'un vers l'autre sous l'effet de la contrainte d'un ressort (34), de même on peut faire pivoter concentriquement à la pièce d'embrayage de poulie à câble (31) un moyen de commande (12) en forme de disque à tirage manuel (35) entre deux butées (36) par rapport à la poulie correspondante (27), où en outre le disque (35) présente une cale de recul (37) qui coopère avec un goujon de recul (32a) de la pièce d'embrayage du bras de flotteur (32).
